# EUROPEAN PATENT APPLICATION

(11) **EP 1 785 307 A1**
(43) Date of publication of application: **16.05.2007**
(21) Application number: 06380270.6
(22) Date of filing: 19.10.2006
(51) Int. Cl.: B60K 15/05, E05F 15/00, E05F 15/20

(54) **Vehicle cap unit**

(30) Priority: 14.11.2005 ES 200502773
(71) Applicant: Maier, S. Coop., 48300 Gernika (ES)
(72) Inventor: Mandaluniz Bilbao, Joseba, 48300 Gernika (ES)
(74) Representative: Urteaga Simarro, José Antonio

(57) **Abstract**

Vehicle cap unit (1) that comprises a cap (2) capable of being opened and closed in relation to a fixed part (3) by the action of an operating means, the opening and closing of the cap (2) being controlled by a control system, where the vehicle cap unit (1) performs the opening and closing of the cap (2) automatically, incorporating mechanisms for the detection of obstacles during the opening or closing of the cap (2), and a capacitive sensor that enables the opening or closing of the cap (2) to begin by means of a slight contact on the cap (2) or an approximation to the cap (2).

## Description

### Technical field

The invention relates to a vehicle cap unit or a unit of pieces provided with a moving cap that opens and closes in relation to a fixed part. The invention is applicable for example to a fuel inlet cap or to other parts of a vehicle such as the ashtray, glove compartment, hatchback door, etc.

### State of the art

The prior art comprises various designs for vehicle fuel inlet caps, which are provided with a fixed part connected to the bodywork of the vehicle and a moving cap capable of being opened and closed on the fixed part, revealing or concealing the mouth of the fuel pipe through which the vehile fuel tank is refuelled.

The operating of the cap, i.e. the action of causing said cap to move, has traditionally been performed by hand by pulling on the cap in order to open it or pushing the cap to close it. More recently, fuel inlet caps have started to incorporate operating elements that facilitate the opening of the cap. As a more simple solution spring-operated caps are known wherein said springs facilitate the opening of the cap, whereas the closure is performed manually. As a more complex solution the incorporation of motors as means for operating the caps is known. An example of this can be found, for example, in patent EP0990548B1, which proposes the insertion of a servomotor in the fuel inlet cap itself in order to act as an operating means.

Generally speaking, the procedure for opening and closing the cap in fuel inlet caps known in the prior art is begun manually, regardless of whether the movement of the cap is maintained afterwards by a spring or another operating means. For example, in numerous technical solutions the cap is secured to the fixed part by a mechanical connection of the push-push type, so that in order to lock or release the cap, the cap must be pushed inwards slightly, the operating means specific to each solution then operating to open the cap.

The present invention aims to offer a vehicle cap unit in general, and a fuel inlet cap in particular, in which not only the operating is automated, but the start of the opening and closing operations is as automated as possible, requiring a minimum action on the part of the user wishing to access the zone concealed by the vehicle cap unit.

### Brief description of the invention

It is an object of this invention to provide a vehicle cap unit that comprises a cap capable of being opened and closed in relation to a fixed part by respective opening and closing actions exerted by an operating means. The opening and closing of the cap is controlled by one or various control units, hereinafter grouped together in conceptual terms under a single generic "control system". In case the control system groups several control units, it will be provided with the necessary communication means between them.

The inventive vehicle cap unit may incorporate a series of novel elements detailed below.

One novel aspect of the invention is that the vehicle cap unit may comprise a capacitive sensor preferably incorporated into the cap itself, as explained in depth in the detailed description of the invention. The function of said sensor is to detect an external presence (an external presence being understood as a slight contact or even an approximation without contact) on the cap, with the objective being that said external presence is interpreted by the control system as an command from the user to open or close the cap, forcing the opening and closing procedures to be conveniently executed. In this way, in order to perform the opening or the closing of the cap it is not necessary to push the cap or pull on it, but simply to move a hand close to the cap or slightly touch the cap with the hand to begin the movement of the cap. The sensor used in this invention is preferably based on applying a nominal load on an electrode present in the vehicle cap unit and on constantly measuring the charge of said electrode, so that when a variation in the charge is detected above or below a threshold it is deduced that there is an external presence (it should be remembered that all bodies in general possess a static electricity that varies in accordance with the conductivity of each body, as a consequence of which the electrode in the sensor has an electrostatic charge different to the electrostatic charge of a person and, according to this principle, a minimum contact or approximation between a person and the cap and, therefore, the electrode, will produce a variation in the electrostatic charge of the electrode).

Due to the fact that the cap may suffer multiple and varied contacts in situations where refuelling is not the objective (for example during car wash), the invention provides a switch, lever or other control with which the user gives the command to begin the opening of the control system. This control is situated in the vehicle compartment, in the ignition key or in another relevant place. In the event that the command does not exist, it is not then possible to open the cap through a slight contact or approximation.

Another aspect of this invention is that the vehicle cap unit performs virtually automatic opening and closing operations of the cap. Starting with a command given by the user, the vehicle cap unit begins the opening or closing and is able to detect whether the opening or closing operation has been performed correctly, or whether during said operation the cap has encountered some kind of obstacle and has not been able to complete the operation successfully. In the event of detecting an obstacle, the cap is preferably returned to its previous state (closed, in the event of having begun an opening operation, or open, in the case of having begun a closing operation).

In order to determine whether a change-of-state operation (open/closed) of the cap has been completed successfully, or whether there have been obstacles, the control system employs as a criterion the value of the information indicating the status of the cap along with a predefined time. Preferably, said indicating information is determined by:
a) the status of one or more cap-position sensors, which give an indication of whether the cap is completely open, completely closed and/or in an intermediate position, or any information in general from which the position of the cap can be deduced (e.g., a potentiometer situated on the axis of rotation between the cap and the fixed part), or
b) in the event that the operating means is an operating means that works with an electric intensity (e.g., a motor), the fact that the level of intensity of the operating means exceeds a predefined value (it must be taken into account that when the cap operated by the operating means reaches a position from which it cannot advance, the operating means operate at maximum force, thus causing an increase in the electric intensity of the operating means).

When the opening or closing of the cap begins, the control system starts a timer (predefined time counter). If it can be deduced from the information indicating the status of the cap that the cap has changed states before said predefined time has ended, the control system determines that the cap has encountered an obstacle during its opening or closing, whereas if it can be deduced from said information indicating the status of the cap that the cap has changed states on or after said predefined time, the control system determines that the cap has opened or closed completely.

Optionally, the vehicle cap unit also comprises a display that provides information on the status of certain relevant parameters of the vehicle cap unit or of the apparatus or system upon which the vehicle cap unit is to be installed. In addition, the vehicle cap unit may also comprise an LED or other light-emitting means so that at least the zone concealed by the cap when the cap is closed is lit when the cap is open.

The invention is applicable not only to a fuel inlet cap but to any vehicle cap unit that comprises a cap capable of being opened and closed in relation to a fixed part. Thus, the vehicle cap unit and the procedures defined by the invention may be situated in the ashtray, glove compartment, hatchback door, etc.

### Brief description of drawings

Details of the invention can be seen in the accompanying non-limiting drawings:
- Figure 1 shows a perspective of an embodiment of the invention, in the form of a fuel inlet cap.
- Figure 2 shows another perspective of the fuel inlet cap of Figure 1.
- Figure 3 shows another perspective of the fuel inlet cap of Figure 1.
- Figure 4 shows a cross-sectioned perspective of the cap in the fuel inlet cap of Figure 1.

### Detailed description of the invention

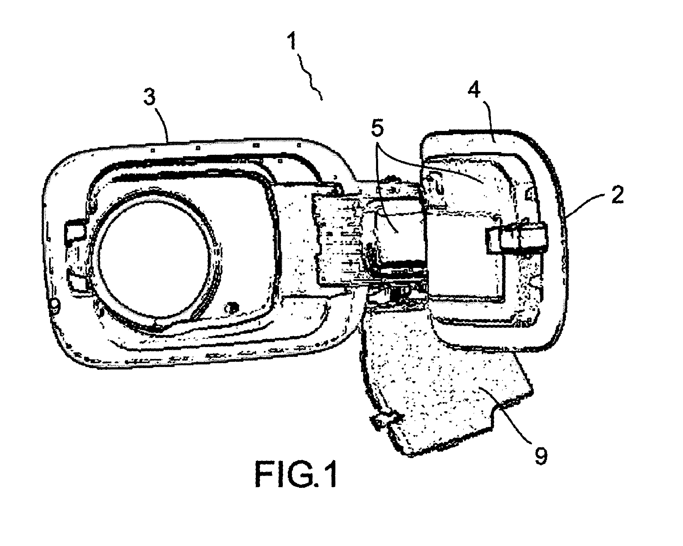

Figure 1 shows an embodiment of an inventive vehicle cap unit (1), in the form of a fuel inlet cap designed to cover the fuel-filling zone of a vehicle, preventing impurities, rainwater and other undesired elements from entering the fuel pipe that connects the exterior of the vehicle with the fuel tank. The vehicle cap unit (1) comprises a fixed part (3), in this case in the shape of a bowl, and a cap (2), in this case formed by a hinge part (5) and aesthetic part (4) formed as two separate parts (4, 5) connected to each other. Obviously, both the cap (2) and the fixed part (3) may take other geometries or be formed by one or more pieces, in alternative embodiments to that of the present figure.

In the embodiment in the figure, the control system that governs the functioning of the vehicle cap unit (1) comprises a local control unit, in this case located in the vehicle cap unit (1), and the vehicle's central control unit, both units being properly connected to each other. For this reason, on one side, the vehicle cap unit (1) of the figure presents a zone (9) for housing the local control unit.

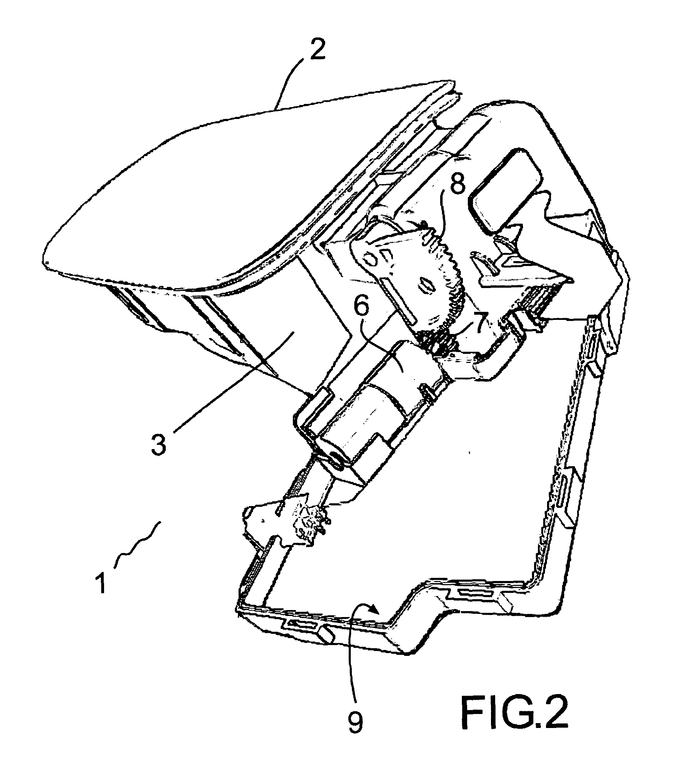

Figure 2 shows another perspective of the vehicle cap unit (1) of Figure 1, detailing a motor (6) that acts as an operating means for causing the movement of the cap (2) in relation to the fixed part (3). Said motor (6) causes the rotation of a pinion (7), which transfers its rotation to a gear assembly (8), in this case with a geometry of a quarter of a circumference. The gear assembly (8) is connected to the cap (2), so that the rotation of the gear assembly (8) can cause a rotation of the cap of approximately 90 degrees.

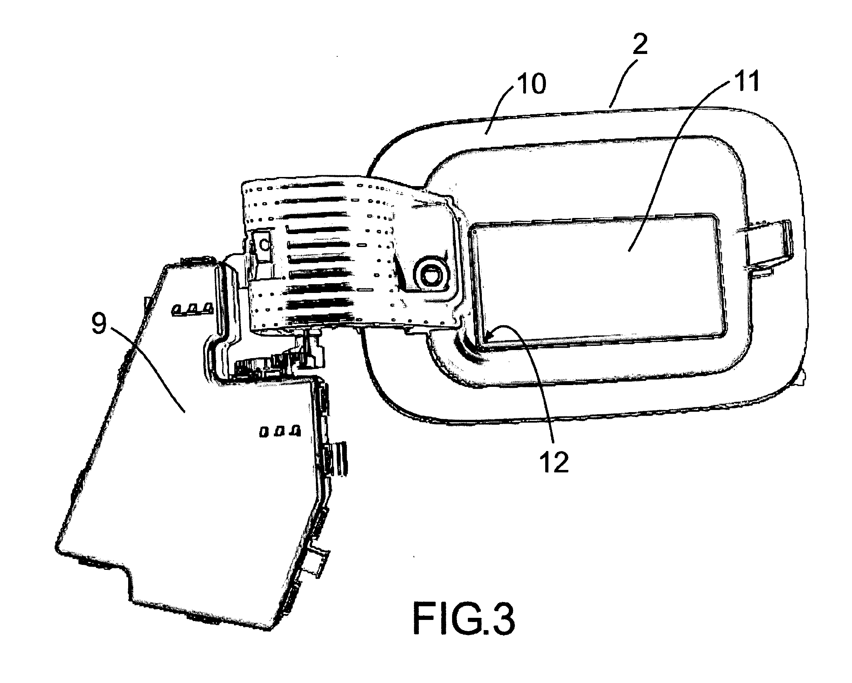

Figure 3 shows another perspective of the vehicle cap unit (1) of Figure 1, the inner face (10) of the cap (2) being visible. Preferably, the inventive vehicle cap unit (1) comprises a display (11) to provide the user with specific relevant information, where in the case of a fuel inlet cap (1) said relevant information may refer to the status of certain vehicle parameters such as the tyre pressure, the level of fuel available in the fuel tank, etc. Furthermore, the vehicle cap unit (1) may incorporate an LED or other light-emitting means (12) so that the zone concealed by the cap (2) when the cap (2) is closed (said area being, in the case of the figure, the fuel-filling zone) is lit when the cap (2) is open.

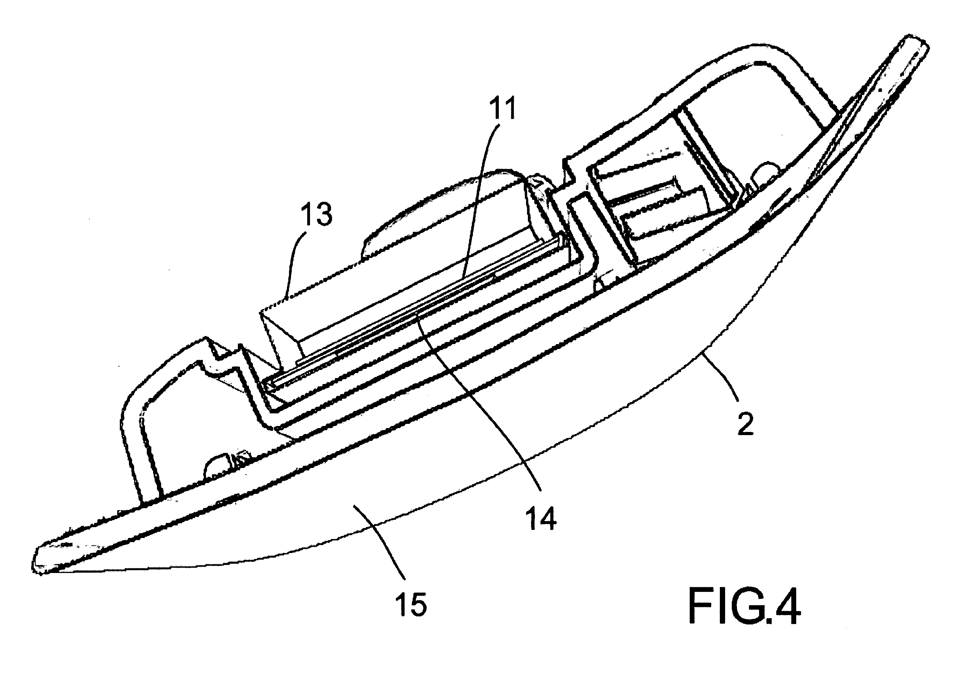

Figure 4 shows a cross-sectioned perspective of the cap (2) of Figure 1, in which can be seen an embodiment of the capacitive sensor's electrode (14), which enables the detection of an external presence on the vehicle cap unit (1). In order for the capacitive sensor to function correctly, the electrode (14) of said capacitive sensor does not need to be located on the outermost surface of the cap (2), the cap (2) does not need to be manufactured from a specific material, and the cap (2) does not need to undergo aesthetic or structural modifications. Because sensors with a sensitivity or scope (distance between the electrode and the most distant point at which the electrode is capable of detecting slight contact) of, for example, a centimetre can be found, it is possible to position the electrode (14) at a certain distance from the outer face (15) of the cap (2). Thus, in the embodiment represented in the figure, it has been decided to position the electrode (14) on the rear face of the display (11), on the side opposite a transparent cover (13). The electrode (14) is concealed in the interior of the cap (2) and protected from external agents such as rain, fuel, etc. Additionally, the electrode (14) may have a variable extension all the way along the longitudinal and/or transverse geometry of the cap (2) to ensure improved detection of an external presence on a greater or lesser part of the outer face (15) of the cap (2).

The procedure for opening the vehicle cap unit (1) in the figures, provided with a capacitive sensor for the detection of an external presence on the vehicle cap unit (1), is as follows:
1) Initially, the vehicle cap unit (1) is in a "sleep mode" in which the capacitive sensor does not operate. The vehicle cap unit (1) only exits said sleep mode when the control system receives a command from the user to begin the opening. The command is preferably sent from a portable remote control (key, etc.) or from a control inside the vehicle. Preferably, once said command to begin the opening has been received, the control system also checks that certain safety conditions are fulfilled (these safety conditions preferably being that the vehicle lights are switched off, that the vehicle engine is switched off, that the hands-free accessory is switched off and that the vehicle radio is switched off).
2) After receiving the command to begin the opening and after checking the safety conditions, the control system begins a checking phase in which it begins the closing action of the operating means (for example, in the event that said operating means is a motor or other similar means, the closing action is equivalent to the rotation of the operating means in the closing direction). Once the control system detects that the cap (2) has been closed completely, it ends the closing action of the operating means. Alternatively, if the control system detects that the cap (2) has encountered an obstacle before closing completely, it preferably provides the user with indicating information (for example, by activating a device on the vehicle dashboard).
3) Once the checking phase has ended and the cap (2) is closed, the control system waits for a new opening command in order to begin the opening phase. Said new opening command is preferably originated by the capacitive sensor located in the fuel inlet cap (1).
4) Once the new opening command has been received, the control system begins an opening phase in which the opening action of the operating means is brought about (rotation in the opening direction, in the event that the operating means is a motor or another similar means).
5) In a final opening phase, the control system detects the final status of the cap (2) and operates accordingly. Thus, when the control system detects that the cap (2) has opened completely, it ends the opening action of the operating means, whereas if the control system detects that the cap (2) has encountered an obstacle before opening completely, it then begins the closing action of the operating means in order to close the cap (2) again. In order to detect the final status of the cap (2), the invention presents two preferred embodiments:
   a. In one of them, the detection that the cap (2) has opened completely takes place when at least one sensor detecting the position of the cap (2) indicates to the control system that the cap has opened completely before a predefined time has elapsed since the start of the opening action of the operating means, whereas the detection of an obstacle takes place when a predefined time has elapsed since the start of the opening action of the operating means without the sensor detecting the position of the cap (2) having indicated that the cap has opened completely.
      In the event that the closing action of the operating means has begun due to the detection of an obstacle, the control system ends said closing action when it detects that the position sensor indicates that the cap has closed before a predefined time has elapsed since the start of the opening action of the operating means, or when said predefined time has been exceeded without receiving information indicating that the cap has closed.
   b. In the other embodiment, and with the operating means being a motor or other operating means that functions with an associated electric intensity, the detection that the cap (2) has opened completely takes place when the control system detects that the electric intensity exceeds a preset level of intensity after a preset time has elapsed since the start of the opening action of the operating means, whereas the detection of an obstacle takes place when the control system detects that the electric intensity of the operating means exceeds a preset level of intensity before a preset time has elapsed since the start of the opening action of the operating means.
      In the event that the closing action of the operating means begins due to the detection of an obstacle, the control system ends said closing action when it detects that the electric intensity of the operating means exceeds a preset level of intensity. In this case it is not determined as to whether said increase of intensity takes place before or after a predefined time.

The procedure for closing the vehicle cap unit (1) in the figures, provided with a capacitive sensor for the detection of an external presence on the vehicle cap unit (1), is as follows:
1) Initially, the control system receives an order to begin the closing of the cap (2), preferably originating from the capacitive sensor.
2) The command to begin the closing action causes the control system to begin the closing action of the operating means (which in the event that the operating means is a motor or similar, is equivalent to a rotation in the closing direction of the operating means).
3) In a final closing phase, the control system detects the final status of the cap (2) and operates accordingly. Thus, when the control system detects that the cap (2) has closed completely, it ends the closing action of the operating means, whereas if the control system detects that the cap (2) has encountered an obstacle before closing completely, it then begins the opening action of the operating means. Additionally, in order to detect the final status of the cap (2), the invention presents two preferred embodiments similar to those detailed in the opening procedure.

In short, and seen from the user's viewpoint, an example of the refuelling procedure (opening and closing) could be as follows: the user wishes to refuel, and for this reason switches off the engine and the lights of the vehicle, and then approaches the fuel inlet cap, slightly touches the cap with their hand and the cap begins to open and remains open. When the user has finished filling up with fuel, they stroke the cap with their hand and the cap closes. There is no need to press the button on the key to return to sleep mode as the fuel inlet cap returns to sleep mode preferably automatically, for example, once a predefined time has elapsed since the cap closed.

The invention contemplates embodiments other than those mentioned. Embodiments are contemplated, for example, in which the operating means (6) is not a motor but any other means that enables the cap (2) to be opened and closed in relation to the fixed part (3) such as, for example, rotary piezoelectric actuators, or an actuator based on shape memory alloy (SMA) materials.

Additionally, as has been mentioned, the functioning of the vehicle cap unit is controlled by a control system that may comprise one or more control units. For example, in the case of fuel inlet caps or other cap units present in the vehicle, the most frequent case is for the vehicle cap unit to be provided with a control unit subjected hierarchically to a central control unit in the vehicle, both being connected by CAN language (currently the predominant language in the automotive industry) or other suitable means. The invention also contemplates alternatives in which the control system is situated entirely inside the vehicle cap unit or situated entirely outside the vehicle cap unit.

## Claims

1. Vehicle cap unit (1) for concealing a specific zone of a vehicle, which comprises a cap (2) capable of being opened and closed in relation to a fixed part (3) by respective opening and closing actions exerted by an operating means (6), **characterised in that**:
- the opening and closing of the cap (2) is controlled by at least one control system,
- the vehicle cap unit (1) comprises means for detecting the status of the cap (2) in order to provide the control system with information indicating the status of the cap (2),
- when the opening or closing of the cap (2) is started in order to change the status of the cap (2) respectively from a closed status to an open status or from an open status to a closed status, the control system starts a predefined time counter so that if said information indicating the status of the cap (2) indicates that the cap (2) has substantially changed status before said predefined time ends, the control system determines that the cap (2) has encountered an obstacle during its change of status, i.e. it has encountered an obstacle during its opening or closing, whereas if said information indicating the status of the cap (2) indicates that the cap (2) has substantially changed status on or after the predefined time, the control system determines that the cap (2) has changed status correctly, i.e. it has opened or closed completely.

2. Vehicle cap unit (1), according to claim 1, wherein the means detecting the status of the cap (2) comprise at least one sensor detecting the position of the cap (2).

3. Vehicle cap unit (1), according to claim 1, wherein the operating means (6) function with an electric intensity, and the means detecting the status of the cap (2) comprise necessary means that ensure that the control system detects whether the level of electric intensity of the operating means (6) exceeds a predefined value.

4. Vehicle cap unit (1) for concealing a specific zone of a vehicle, which comprises a cap (2) capable of being opened and closed in relation to a fixed part (3) by respective opening and closing actions exerted by an operating means (6), **characterised in that**:
- the opening and closing of the cap (2) is controlled by at least one control system,
- the vehicle cap unit (1) comprises at least one capacitive sensor for the detection of an external presence on the vehicle cap unit (1), the activation of said capacitive sensor being interpreted by the control system as an external command for closing or opening the cap (2).

5. Vehicle cap unit (1), according to claim 1 or 4, wherein at least one part of the control system is comprised in the vehicle cap unit (1).

6. Vehicle cap unit (1), according to claim 5, further comprising a housing zone (9) in which the part of the control system that is comprised in the vehicle cap unit (1) is located.

7. Vehicle cap unit (1), according to claim 1 or 4, further comprising a display (11) for visualising information.

8. Vehicle cap unit (1), according to claim 7, wherein the display (11) is situated on an inner face (10) of the cap (2).

9. Vehicle cap unit (1), according to claim 1 or 4, further comprising a light-emitting means (12) so that at least the zone that is concealed by the cap (2) when the cap (2) is closed is lit when the cap (2) is open.

10. Vehicle cap unit (1), according to claim 9, wherein the light-emitting means (12) is situated on an inner face (10) of the cap (2).

11. Vehicle cap unit (1), according to claim 1 or 4, wherein the specific zone is substantially the fuel filling zone of the vehicle.

12. Vehicle cap unit (1), according to claim 1 or 4, wherein the operating means (6) is a motor.

13. Procedure for opening a vehicle cap unit (1) in order to conceal a specific zone of a vehicle, where said vehicle cap unit (1) comprises a cap (2) capable of being opened and closed in relation to a fixed part (3) by respective opening and closing actions exerted by an operating means, **characterised in that** the opening procedure is controlled by a control system and comprises the following phases:
- the reception by the control system of a command to begin the opening of the cap (2),
- an opening phase, in which the control system begins the opening action of the operating means.

14. Procedure for opening a vehicle cap unit (1), according to claim 13, wherein the command to begin the opening action is emitted by a portable remote control.

15. Procedure for opening a vehicle cap unit (1), according to claim 13, wherein the command to begin the opening is emitted by a control inside the vehicle.

16. Procedure for opening a vehicle cap unit (1), according to claim 13, wherein before beginning the opening action of the operating means, the control system checks that at least one of the following safety conditions: that the vehicle lights are switched off, that the vehicle engine is switched off, that the hands-free accessory is switched off, and that the vehicle radio is switched off.

17. Procedure for opening a vehicle cap unit (1), according to claim 13, wherein at least the reception of the command to begin the opening of the cap (2) causes the vehicle cap unit (1) to exit a sleep mode so that once said sleep mode has been exited, the reception of a new opening command begins the opening phase.

18. Procedure for opening a vehicle cap unit (1), according to claims 16 and 17, wherein in order for the vehicle cap unit (1) to exit the sleep mode it is necessary for at least one of said safety conditions to be complied with.

19. Procedure for opening a vehicle cap unit (1), according to claim 17, wherein said new opening command is generated by a capacitive sensor present in the vehicle cap unit (1).

20. Procedure for opening a vehicle cap unit (1), according to claim 13, wherein after receiving the command to begin the opening and before the opening phase, the procedure comprises a checking phase, in which the control system begins the closing action of the operating means and, once it detects that the cap (2) has closed completely, ends the closing action of the operating means.

21. Procedure for opening a vehicle cap unit (1), according to claim 20, wherein if during the checking phase the control system detects that the cap (2) has encountered an obstacle before closing completely, it provides the user with indicating information.

22. Procedure for opening a vehicle cap unit (1), according to claim 13, wherein it also comprises a final opening phase in which, when the control system detects that the cap (2) has opened completely, it ends the opening action of the operating means, whereas if the control system detects that the cap (2) has encountered an obstacle before opening completely, it then begins the closing action of the operating means.

23. Procedure for opening a vehicle cap unit (1), according to claim 22, wherein, in the fmal opening phase, the detection that the cap (2) has opened completely takes place when the control system detects that at least one sensor detecting the position of the cap (2) indicates that the cap (2) has opened completely before a preset time has elapsed since the start of the opening action of the operating means, whereas the detection of an obstacle takes place when the control system detects that a preset time has elapsed since the start of the opening action of the operating means without the sensor detecting the position of the cap (2) having indicated that the cap has opened completely.

24. Procedure for opening a vehicle cap unit (1), according to claim 23, wherein the closing action of the operating means, begun in the final opening phase due to the detection of an obstacle, ends when the control system detects that said sensor detecting the position of the cap (2) indicates that the cap (2) has closed completely before a preset time has elapsed since the start of the closing action of the operating means.

25. Procedure for opening a vehicle cap unit (1), according to claim 22, wherein the operating means is associated with an electric intensity, and the procedure is **characterised in that**, in the final opening phase, the detection that the cap (2) has opened completely takes place when the control system detects that the electric intensity of the operating means exceeds a preset level of electric intensity substantially when or after a preset time has elapsed since the beginning of the opening action of the operating means, whereas the detection of an obstacle takes place when the control system detects that the electric intensity of the operating means exceeds a preset level of electric intensity substantially before a preset time has elapsed since the beginning of the opening action of the operating means.

26. Procedure for opening a vehicle cap unit (1), according to claim 25, wherein the closing action of the operating means, begun in the final opening phase due to the detection of an obstacle, ends when the control system detects that the electric intensity of the operating means exceeds a preset level of intensity.

27. Procedure for opening a vehicle cap unit (1), according to claim 13, wherein the specific zone is substantially the fuel filling zone of the vehicle.

28. Procedure for closing a vehicle cap unit (1), to conceal a specific zone of a vehicle, where said vehicle cap unit (1) comprises a cap (2) capable of being opened and closed in relation to a fixed part (3) by respective opening and closing actions exerted by an operating means, **characterised in that** the closing procedure is controlled by a control system and comprises the following phases:
- the reception by the control system of a command to begin the closing of the cap (2),
- a closing phase in which the control system begins the closing action of the operating means.

29. Procedure for closing a vehicle cap unit (1), according to claim 28, wherein the command to begin the closing phase is generated by a capacitive sensor present in the vehicle cap unit (1).

30. Procedure for closing a vehicle cap unit (1), according to claim 28, wherein it also comprises a final closing phase in which, when the control system detects that the cap (2) has closed completely, the closing action of the operating means ends, whereas if the control system detects that the cap (2) has encountered an obstacle before closing, it then begins the opening action of the operating means.

31. Procedure for closing a vehicle cap unit (1), according to claim 30, wherein in the final closing phase, the detection that the cap (2) has closed completely takes place when the control system detects that at least one sensor detecting the position of the cap (2) indicates that the cap (2) has closed completely before a preset time has elapsed since the beginning of the closing action of the operating means, whereas the detection of an obstacle takes place when the control system detects that a preset time has elapsed since the beginning of the closing action of the operating means without the sensor detecting the position of the cap (2) having indicated that the cap has closed completely.

32. Procedure for closing a vehicle cap unit (1), according to claim 31, wherein the opening action of the operating means, begun in the final closing phase due to the detection of an obstacle, ends when the control system detects that said sensor detecting the position of the cap (2) indicates that the cap (2) has opened completely before a preset time has elapsed since the beginning of the opening action of the operating means.

33. Procedure for closing a vehicle cap unit (1), according to claim 30, wherein the operating means is associated to an electric intensity, and the procedure is **characterised in that**, in the final closing phase, the detection that the cap (2) has closed completely takes place when the control system detects that the electric intensity of the operating means exceeds a preset level of intensity substantially when or after a preset time has elapsed since the beginning of the closing action of the operating means, whereas the detection of an obstacle takes place when the control system detects that the electric intensity of the operating means exceeds a preset level of intensity substantially before a preset time has elapsed since the beginning of the closing action of the operating means.

34. Procedure for closing a vehicle cap unit (1), according to claim 33, wherein the opening action of the operating means, begun in the final closing phase due to the detection of an obstacle, ends when the control system detects that the electric intensity of the operating means exceeds a preset level of intensity.

35. Procedure for closing a vehicle cap unit (1), according to claim 28, wherein the specific zone is substantially the fuel-filling zone of the vehicle.
